# EUROPEAN PATENT APPLICATION

(11) **EP 4 811 218 A1**
(43) Date of publication of application: **23.09.2026**
(21) Application number: 26163491.9
(22) Date of filing: 10.03.2026
(51) Int. Cl.: G06N 3/08, G06N 20/00

(54) **APPARATUS, METHOD, AND PROGRAM**

(30) Priority: 18.03.2025 JP 2025043179
(71) Applicant: Yokogawa Electric Corporation, Tokyo 180-8750 (JP)
(72) Inventor: Akiyoshi, Ryutaro, Tokyo, 180-8750 (JP)
(74) Representative: Hoffmann Eitle

(57) **Abstract**

Provided is an apparatus including a processor, in which the processor executes acquisition processing of acquiring a plurality of pieces of data each including a feature value, splitting processing of splitting the plurality of pieces of data acquired, into a training data group for performing training processing of a learning model and a test data group for testing the learning model, calculation processing of calculating an effect size corresponding to a difference in a feature value between the training data group and the test data group, and determination processing of determining appropriateness or inappropriateness of the test data group based on the effect size calculated.

## Description

### BACKGROUND

### 1. TECHNICAL FIELD

The present invention relates to an apparatus, a method, and a program.

### 2. RELATED ART

Patent Documents 1 to 3 describe "generation of well-balanced training data set" (paragraph 0039 of Patent Document 1) or the like.

### Related Art Documents

### Patent Documents

Patent Document 1: Japanese Patent Application Publication No. 2008-512800
Patent Document 2: Japanese Patent Application Publication No. 2004-013328
Patent Document 3: Japanese Patent Application Publication No. 2009-536971

### SUMMARY

(1) According to a first aspect of the present invention, provided is an apparatus including: a processor, and the processor executes acquisition processing of acquiring a plurality of pieces of data each including a feature value, splitting processing of splitting the plurality of pieces of data acquired, into a training data group for performing training processing of a learning model and a test data group for testing the learning model, calculation processing of calculating an effect size corresponding to a difference in a feature value between the training data group and the test data group, and determination processing of determining appropriateness or inappropriateness of the test data group based on the effect size calculated. A feature may be a parameter indicating a shape, texture, or an internal state of a subject as a target of a data group. In the acquisition processing, data each including a feature value of the subject may be acquired for each subject.
(2) In the above-described apparatus of (1), the processor may further executes specifying processing of specifying a split ratio between a test data group determined to be appropriate by the determination processing and a training data group.
(3) In the above-described apparatus of (2), in the splitting processing, a plurality of sets of training data groups and test data groups may be generated with split ratios different from each other from the plurality of pieces of data, in the calculation processing, an effect size may be calculated for each of the plurality of sets, and in the determination processing, one of a plurality of test data groups may be determined to be appropriate based on the effect size calculated.
(4) In the above-described apparatus of (2) or (3), in the splitting processing, a set of a training data group and a test data group may be generated by varying a split ratio such that a ratio of the test data group decreases sequentially, in the calculation processing, an effect size may be calculated each time a set of a training data group and a test data group is generated, and in the determination processing, a test data group of a set generated last among sets in which an effect size falls below a predetermined upper limit value may be determined to be appropriate.
(5) In the above-described apparatus of any one of (1) to (4), in the splitting processing, the plurality of pieces of data may be split such that a test data group is smaller than a training data group.
(6) In the above-described apparatus of any one of (1) to (5), in the calculation processing, an effect size may be calculated for each of a plurality of features included in each data, and in the determination processing, a determination may be made based on a largest effect size among effect sizes calculated for respective features.
(7) In the above-described apparatus of any one of (1) to (6), the processor may further execute selection processing of selecting at least one feature from among a plurality of features included in each data, and in the calculation processing, an effect size may be calculated for the feature selected.
(8) In the above-described apparatus of any one of (1) to (7), the processor may further execute training processing of training a learning model by using data included in a training data group, and test processing of testing the learning model trained, by using data included in a test data group.
(9) According to a second aspect of the present invention, provided is a method including: acquiring a plurality of pieces of data each including a feature value; splitting the plurality of pieces of data acquired, into a training data group for performing training of a learning model and a test data group for testing the learning model; calculating an effect size corresponding to a difference in a feature value between the training data group and the test data group; and determining appropriateness or inappropriateness of the test data group based on the effect size calculated.
(10) According to a third aspect of the present invention, provided is a program which, when executed by a computer, causes the computer to perform operations including: acquiring a plurality of pieces of data each including a feature value; splitting the plurality of pieces of data acquired, into a training data group for performing training processing of a learning model and a test data group for testing the learning model; calculating an effect size corresponding to a difference in a feature value between the training data group and the test data group; and determining appropriateness or inappropriateness of the test data group based on the effect size calculated.

The summary clause does not necessarily describe all necessary features of the embodiments of the present invention. The present invention may also be a sub-combination of the features described above.

### BRIEF DESCRIPTION OF THE DRAWINGS

Fig. 1 illustrates an apparatus 1 according to an embodiment.
Fig. 2 illustrates an acquisition data group.
Fig. 3 illustrates an operation of the apparatus 1.
Fig. 4 illustrates a method of generating a subject group.
Fig. 5 illustrates a method of capturing a subject group.
Fig. 6 illustrates a tip shape of a subject.
Fig. 7 illustrates a hole shape of the subject.
Fig. 8 illustrates a ridge shape of the subject.
Fig. 9 illustrates a valley shape of the subject.
Fig. 10 illustrates an edge shape of the subject.
Fig. 11 illustrates a saddle shape of the subject.
Fig. 12 illustrates an apparatus 1A according to a modification.
Fig. 13 illustrates an operation of the apparatus 1A.
Fig. 14 illustrates an example of a computer 1200 in which a plurality of aspects of the present invention may be embodied in whole or in part.

### DESCRIPTION OF EXEMPLARY EMBODIMENTS

The present invention will be described below through embodiments of the invention, but the following embodiments do not limit the invention according to the claims. In addition, not all combinations of features described in the embodiments are essential to a solution of the invention.

### (Apparatus 1)

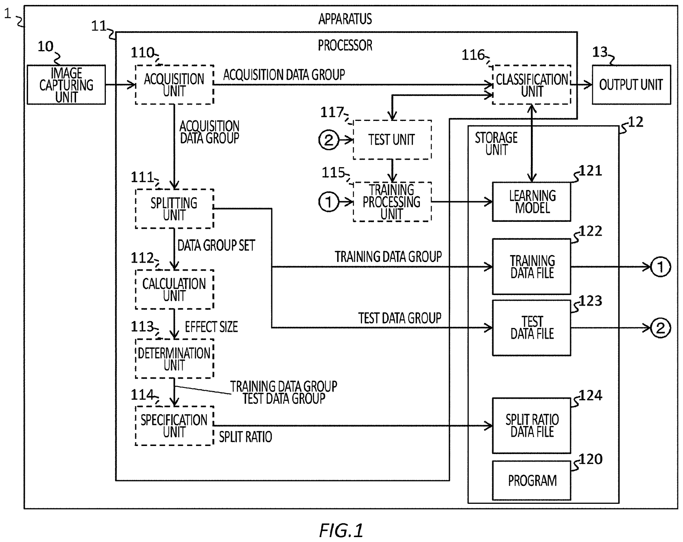

Fig. 1 illustrates an apparatus 1 according to the present embodiment. The apparatus 1 generates a learning model 121, and includes an image capturing unit 10, a processor 11, a storage unit 12, and an output unit 13.

### ((Image capturing unit 10))

The image capturing unit 10 captures a sample.

Here, in the sample, cells or microorganisms as a subject may be dispersed therein. As an example, the sample may be a culture medium of cells. The cells may be dispersed in a two-dimensional plane or in a three-dimensional space. The cells may be derived from a human or from another organism. As an example, the cells may be iPS cells (induced pluripotent stem cells) subjected to differentiation treatment, and may include at least one of an undifferentiated cell or a differentiated cell. However, a type of the cells is not limited thereto, and the cells may also be embryonic stem (ES) cells, mesenchymal stem (MS) cells, neural stem cells, hematopoietic stem cells, muscle stem cells, epithelial stem cells, adipose-derived stem (ADS) cells, liver stem cells, intestinal stem cells, spermatogonial stem (SS) cells, or lung stem cells.

The image capturing unit 10 may capture the sample in a state where the subject is non-destructive and unstained. The subject being non-destructive may mean that destruction processing is not performed on each part of the subject. The subject being unstained may mean that staining processing is not performed on each part of the subject.

The image capturing unit 10 may include a microscope for enlarging and capturing a subject. The microscope may be any type of microscope, such as, for example, a bright field microscope. The image capturing unit 10 may supply a captured image of the subject group to an acquisition unit 110 described later.

### ((Storage unit 12))

The storage unit 12 stores various types of information. The storage unit 12 according to the present embodiment may store a program 120, the learning model 121, a training data file 122, a test data file 123, and a split ratio data file 124.

### (((Program 120)))

The program 120 is executed by the processor 11 to cause the processor 11 to perform various types of processing.

### (((Learning model 121)))

The learning model 121 is used for classification by a classification unit 116 described later. The learning model 121 may be generated by training processing by a training processing unit 115 described later. In accordance with an input of a data group (also referred to as an input data group), the learning model 121 may output content corresponding to the input data group. In accordance with an input of an input data group, the learning model 121 according to the present embodiment may output a classification of a target (in the present embodiment, a subject group as an example) indicated by the input data group. The classification of the target will be described later in detail.

### (((Training data file 122)))

The training data file 122 stores one or more training data groups.

### (((Test data file 123)))

The test data file 123 stores one or more test data groups.

### (((Split ratio data file 124)))

A split ratio between the training data group and the test data group is stored. The split ratio will be described later in detail.

### ((Processor 11))

The processor 11 performs various types of processing by executing the program 120 stored in the storage unit 12. The processor 11 may realize a functional unit which performs various types of processing by executing the program 120. The processor 11 according to the present embodiment may realize the acquisition unit 110, a splitting unit 111, a calculation unit 112, a determination unit 113, a specification unit 114, the training processing unit 115, the classification unit 116, and a test unit 117.

### (((Acquisition unit 110)))

The acquisition unit 110 acquires a plurality of pieces of data (also referred to as an acquisition data group) each including a feature value. The acquisition unit 110 may acquire a plurality of pieces of data each including a feature value of a subject, or may acquire separate data for each subject. The acquisition unit 110 may analyze one or more images supplied from the image capturing unit 10 to detect a subject in the images, and may specify at least one feature value for each subject detected. The acquisition unit 110 may acquire a data group including a feature value (in the present embodiment, a feature vector as an example) by generating, as data, the feature vector including the feature value as an element for each subject.

Here, a target indicated by the acquisition data group may be a subject group, and may be a cell group as an example. Targets indicated by the acquisition data group may belong to separate classifications according to at least one of types or states of the targets. As an example, a target as a cell group may belong to different classifications depending on whether the cell group is normal or abnormal, may belong to different classifications depending on a cell cycle of the cell group, may belong to different classifications depending on an expressed gene, may belong to different classifications depending on an expression level of a specific gene, may belong to different classifications depending on a generation level of a specific protein, or may belong to different classifications depending on a differentiation state from iPS cells or hematopoietic stem cells (HPC).

The feature may be a parameter indicating a shape, texture, an internal state, or the like of a subject.

The feature indicating the shape (also referred to as a feature of the shape) may include at least one of an area (µm²), a diameter (µm), a perimeter (µm), circularity, a compactness measure, asymmetry, boundary smoothness, a skeleton length, a ratio of a major axis and a minor axis, a skeletonized length, a branching number, or a branch number. The diameter may be a longest length or a shortest length among straight lines passing through a center of a cell. The perimeter may be a length of a contour of the cell and is also referred to as the circumferential length. The compactness measure may be an index indicating how much an internal structure (cytoplasm, nucleus, or the like) of the cell is clogged, and is also referred to as compactness. The asymmetry may be an index of low symmetry of a cell shape. The boundary smoothness may be an index indicating how uniform a shape of a cell membrane is or whether irregular deformation does not occur in the cell membrane, and may be calculated from an expression of smoothness = (length of cell boundary)²/(4π·area of cell). The skeleton length may be a length of a line passing through a center portion of the cell, and when the cell is branched, the skeleton length may be a length obtained by connecting center lines of respective branch portions. The ratio of the major axis to the minor axis may be a ratio of a length in a major axis direction of the cell to a length in a minor axis direction of the cell, and is also referred to as an anisometry. The branching number may be a number of at least one branch point, and the branch number may be a number of at least one branch at a tip of a branch.

The texture of the subject may be markings or a pattern exhibited by the subject, or may be generated by a shape of a capturing target in an image capturing direction. A feature indicating the texture of the subject (also referred to as a feature of texture) may be a number of at least one region indicating the corresponding texture in the subject. The feature of the texture may be, for example, at least one type of a number of at least one texture indicating a tip shape (Peak), a number of at least one texture indicating a hole shape (Hole), a number of at least one texture indicating a ridge shape (Ridge), a number of at least one texture indicating a valley shape (Valley), a number of at least one texture indicating an edge shape (Edge), a number of at least one texture indicating a saddle shape (Saddle), or the like. Each texture will be described later in detail.

When the subject is a cell or a microorganism, the feature indicating the internal state may include at least one of an area of the nucleus, the circularity of the nucleus, a nuclear to cytoplasmic ratio (also referred to as N/C ratio), a granularity distribution in the subject, or a polarization direction of the subject. The N/C ratio may be a ratio occupied by the nucleus in the subject, and may be calculated from an expression of N/C ratio = area of nucleus/(area of entire subject - area of nucleus). When the subject is a cell, the granularity distribution in the subject may be an index indicating at least one of a mean µ_d or a variance σ_d² of a distribution of granular structures existing inside the cytoplasm or inside the nucleus. The mean µ_d of the distribution may be calculated by an expression of µ_d = (1/N)Σd_i (where "d_i" is a diameter of an i-th particle, and N is a number of at least one particle), and the variance σ_d² of the distribution may be calculated by an expression of σ_d² = (1/N)Σ(d_i - µ_d)². The polarization direction of the subject may be an index indicating a direction in which the subject is aligned or elongated. A polarization direction θ may be calculated by an expression of θ = (1/2)tan⁻¹(2M_xy/(M_xx - M_yy). In the expression, "M_xx", "M_yy", and "M_xy" may be second moments of a subject shape calculated by equations of M_xx = Σ(x - x^{*})², M_yy = Σ(y - y^{*})², and M_xy = Σ(x - x*)(y - y*), "x" and "y" may be an x coordinate and a y coordinate on a contour of the subject, and "x*" and "y^{*}" may be barycentric coordinates of the subject (that is, a center of a subject region). The polarization direction θ may be a direction of a first principal component obtained by performing principal component analysis using the second moment as a covariance matrix. The polarization direction θ may indicate that when it is close to 0, the subject is oriented in an x axis direction, when it is close to ±90, the subject is oriented in a y axis direction, and when it is ±45, the subject is elongated in a diagonal direction.

The feature may indicate a value corresponding to a temporal change in a state of the subject. For example, the feature may indicate a value corresponding to a temporal change or periodicity of the change in the parameter indicating the shape, the texture, the internal state, or the like of the subject. Additionally or alternatively, the feature may indicate at least one of a moving speed, a rotation speed, a moving direction, a moving pattern, an index value of collective migration of the subject, an index value of division of the subject, or an index value of fusion of the subject. The moving direction may be used as the feature in a state of a direction vector in an image, for example, a combination of a vertical component and a horizontal component. The moving pattern may be used as the feature in a state of a combination of moving directions of the subject at three or more time points. An evaluation value of the collective migration may indicate synchrony or coordination of a speed and a moving direction of a target subject with respect to a surrounding subject, in other words, cohesion of collective movement, and as an example, may be an angular difference between a velocity vector of a target cell and an average velocity vector of neighboring cells, or may be an inner product of unit vectors obtained by normalizing these vectors. The index value of division or fusion of the subject may indicate a frequency of occurrence of division or fusion for a target subject, and may be, for example, a number of at least one occurrence per unit time, an occurrence rate, or an occurrence rate. The index value of division or fusion of the subject may indicate presence or absence of occurrence of division or fusion for a target subject. Note that the value corresponding to the temporal change in the state of the subject may be calculated by analyzing a plurality of images (for example, individual images obtained by time-lapse imaging).

When acquiring data including a plurality of features, the acquisition unit 110 may acquire the data including the plurality of features in a state of being standardized on a common scale. For example, the acquisition unit 110 may standardize each feature in a plurality of pieces of data acquired, such that a mean is 0 and a variance is 1, and acquire data including the standardized feature. The acquisition unit 110 may standardize each feature using a following expression.$Standardized feature = \left(x-μ\right) / σ$

In the expression, "x" may be a feature value before standardization, "µ" may be a mean of the feature before standardization, and "σ" may be a standard deviation of the feature before standardization.

The acquisition unit 110 may supply the acquisition data group to the splitting unit 111 in a training stage of the learning model 121. A tag (also referred to as a classification tag) indicating a classification of a target (in the present embodiment, a subject group as an example) indicated by the acquisition data group may be added to the acquisition data group in the training stage by a user operation or the like.

The acquisition unit 110 may supply the acquisition data group to the classification unit 116 in an operational stage of the learning model 121, that is, in a stage of using the trained learning model 121. The acquisition data group in the operational stage may indicate an unknown target for which a classification is unknown, and may not be added with the classification tag.

### (((Splitting unit 111)))

The splitting unit 111 splits the acquisition data group acquired by the acquisition unit 110 into a training data group and a test data group. The classification tag of the original acquisition data group may be added to each of the training data group and the test data group.

Here, the training data group may be a data group for performing training processing of the learning model 121, and the test data group may be a data group for performing a test of the learning model 121. In the present embodiment, each data of the acquisition data group may include a feature vector of one corresponding subject, and the splitting unit 111 may split a plurality of pieces of data for a plurality of subjects into a training data group that is data for some subjects and a test data group that is data for other subjects. As an example, the splitting unit 111 may split a plurality of pieces of data on a plurality of subjects acquired from one or more images into the training data group and the test data group.

The splitting unit 111 may perform splitting based on a position of a subject in an image, and as an example, the image may be split into a region for the training data group and a region for the test data, data of a subject group included in the region for the training data group may be set as the training data group, and data of a subject group included in the region for the test data group may be set as the test data group. However, the splitting unit 111 may perform the splitting independently of the position of the subject in the image.

The splitting unit 111 may split the acquisition data group such that the test data group is smaller than the training data group. As an example, the splitting unit 111 may split the acquisition data group such that the test data group is 30% or less.

The splitting unit 111 may split the acquisition data group to generate a set (also referred to as a data group set) of the training data group and the test data group. The splitting unit 111 may perform different processing according to whether or not a split ratio is specified by the specification unit 114 described later.

### (((When split ratio is not specified)))

When the split ratio is not specified by the specification unit 114, the splitting unit 111 may generate a plurality of data group sets with split ratios different from each other from the acquisition data group. For example, when a split ratio of the training data group is represented by "Pa" and a split ratio of the test data group is represented by "Pb", the splitting unit 111 may generate a first data group set obtained by splitting the acquisition data group into Pa₁:Pb₁, a second data group set obtained by splitting the acquisition data group into Pa₂:Pb₂, or the like.

The splitting unit 111 may store, in the training data file 122, the training data group of each data group set generated by the splitting, and may store the test data group in the test data file 123. Note that, among those training data groups and test data groups, a test data group determined to be inappropriate and corresponding training data group may be removed from the training data file 122 and the test data file 123 by the determination unit 113 described later.

The splitting unit 111 may supply, to the calculation unit 112, each data group set generated by the splitting. The splitting unit 111 may further supply, to the calculation unit 112, the split ratio between the training data group and the test data group in each data group set in association with the data group set.

### (((When split ratio is specified)))

When the split ratio is specified by the specification unit 114, the splitting unit 111 may split the acquisition data group at the specified split ratio to generate a data group set. The splitting unit 111 may acquire the specified split ratio from the split ratio data file 124 of the storage unit 12. The splitting unit 111 may store, in the training data file 122, the training data group of the generated data group set, and store the test data group in the test data file 123.

### (((Calculation unit 112)))

The calculation unit 112 calculates an effect size corresponding to a difference in a feature value between the training data group and the test data group. The calculation unit 112 may calculate the effect size in accordance with the data group set being supplied from the splitting unit 111. The calculation unit 112 may calculate the effect size for each of a plurality of features included in each data. The calculation unit 112 may calculate the effect size for each feature by a following expression.
$Effect size = \left({μ}_{1}-{μ}_{2}\right) / √ \left\{\left({{σ}_{1}}^{2}+{{σ}_{2}}^{2}\right)/2\right\}$

In the expression, "µ₁" may be a mean in the training data group for a target feature, and "µ₂" may be a mean in the test data group for the target feature. "σ₁" may be a standard deviation in the training data group for the target feature, and "σ₂" may be a standard deviation in the test data group for the target feature.

The effect size calculated by the above expression may indicate that, when effect size < 0.2, there is almost no statistical difference in a feature value between the training data group and the test data group. In addition, this effect size may indicate that, when 0.2 ≤ effect size <0.5, there is a slight statistical difference in a feature value between the training data group and the test data group. In addition, this effect size may indicate that, when 0.5 ≤ effect size, there is a significant statistical difference in a feature value between the training data group and the test data group.

When the training data group and the test data group are supplied for each of a plurality of data group sets from the splitting unit 111, the calculation unit 112 may calculate the effect size for each of the plurality of data group sets. The calculation unit 112 may calculate, for each data group set, the effect size for each of a plurality of features.

The calculation unit 112 may supply the calculated effect size of each feature to the determination unit 113. When calculating the effect size for each data group set, the calculation unit 112 may supply, to the determination unit 113, the calculated effect size of each feature for each data group set. The calculation unit 112 may further supply each data group set supplied from the splitting unit 111 and the split ratio thereof to the determination unit 113 in association with the effect size.

### (((Determination unit 113)))

The determination unit 113 determines appropriateness or inappropriateness of the test data group based on the calculated effect size. The appropriateness or inappropriateness of the test data group may indicate whether or not the difference in a feature value from the training data group is statistically small, and furthermore, whether or not a test can be performed with high accuracy when the learning model 121 trained with each data of the training data group is tested with each data of the test data group.

The determination unit 113 according to the present embodiment may make a determination based on a largest effect size among the effect sizes calculated for respective features. For example, the determination unit 113 may make the determination by extracting a largest effect size (also referred to as a maximum effect size) from the effect sizes for respective features and comparing the maximum effect size with a predetermined upper limit value. The upper limit value may be 0.05, 0.10, 0.15, 0.20, or the like, and may be arbitrarily set by a user. The determination unit 113 may determine that the test data group is appropriate in accordance with the maximum effect size being less than the upper limit value. Accordingly, it is possible to specify a test data group split such that there is no statistical difference for each feature.

When the effect size is supplied from the calculation unit 112 for each of a plurality of data group sets, the determination unit 113 may determine any of a plurality of test data groups in the plurality of data group sets as appropriate, based on the calculated effect size. For example, the determination unit 113 may extract a maximum effect size for each of the plurality of data group sets, compare the maximum effect size with the upper limit value, and determine that any one test data group among the data group sets in which the maximum effect size is less than the upper limit value is appropriate. As an example, the determination unit 113 may determine that a test data group having a smallest split ratio among the data group sets in which the maximum effect size is less than the upper limit value is appropriate. The determination unit 113 may determine that a remaining test data group, which is not determined to be appropriate, among the plurality of test data groups is inappropriate.

The determination unit 113 may supply the test data group determined to be appropriate and the training data group to the specification unit 114. Alternatively, the determination unit 113 may supply, to the specification unit 114, a split ratio of a data group set, which is determined to be appropriate, among the split ratios of respective data group sets supplied from the calculation unit 112.

The determination unit 113 may delete a test data group determined to be inappropriate and a corresponding training data group from the training data groups and the test data groups stored in the training data file 122 and the test data file 123. Accordingly, in the training data file 122 and the test data file 123, a test data group determined to be appropriate and a corresponding training data group may be left and used for training and testing of the learning model 121.

### (((Specification unit 114)))

The specification unit 114 specifies a split ratio between a test data group determined to be appropriate by the determination unit 113 and a training data group. The specification unit 114 may calculate a ratio between the training data group and the test data group supplied from the determination unit 113 and specify the ratio as a split ratio determined to be appropriate. When a split ratio is supplied from the determination unit 113, the specification unit 114 may specify the split ratio as the split ratio determined to be appropriate. The specification unit 114 may store the specified split ratio in the split ratio data file 124 in the storage unit 12.

### (((Training processing unit 115)))

The training processing unit 115 trains the learning model 121 by using data included in a training data group. The training processing unit 115 may train the learning model 121 by using the training data group stored in the training data file 122 of the storage unit 12. The training processing unit 115 may perform training processing by using training data including a plurality of pieces of data included in the training data group and a classification of a target (in the present embodiment, a subject group as an example) indicated by the plurality of pieces of data.

The training processing unit 115 may perform the training processing, for example, by various learning algorithms such as a support vector machine, a logistic regression, a decision tree, and a neural network. Note that the training processing unit 115 may generate the learning model 121 by instance-based learning. In this case, the learning model 121 may calculate a configuration ratio of each cluster by clustering an input data group, collate the calculated configuration ratio with a configuration ratio indicated by the training data group (that is, a known configuration ratio calculated when clustering is performed on separate data groups for which classifications are known), and output a classification of a target indicated by the input data group. The training processing unit may perform the training processing of the learning model 121 stored in the storage unit 12.

### (((Classification unit 116)))

The classification unit 116 classifies a target indicated by a data group (in the present embodiment, a subject group as an example) by using the learning model 121. The classification unit 116 may set a classification, which is output from the learning model 121 in accordance with supplying the data group to the learning model 121, as a classification of the target indicated by the data group.

In the training stage of the learning model 121, the classification unit 116 may receive a supply of a test data group from the test unit 117, and may supply, to the test unit 117, a classification result of a target indicated by the test data group. In the operational stage of the learning model 121, the classification unit 116 may receive a supply of an acquisition data group from the acquisition unit 110, and may supply, to the output unit 13, a classification result of a target indicated by the acquisition data group, that is, an unknown target. The classification result may include classification identification information (also referred to as classification ID) as an example.

### (((Test unit 117)))

The test unit 117 tests the trained learning model 121 by using data included in a test data group. The test unit 117 may test the learning model 121 by using the test data group stored in the test data file 123 of the storage unit 12. The test unit 117 may supply the test data group to the classification unit 116 and acquire a classification result from the classification unit 116. The test unit 117 may determine whether a test passes or fails, based on whether or not a classification added to the test data group matches the classification result by the classification unit 116. The test unit 117 may end the training processing by the training processing unit 115 when the test passes, and may perform the training processing by the training processing unit 115 again when the test fails.

### ((Output unit 13))

The output unit 13 outputs various types of information. The output unit 13 may display information or transmit the information to external equipment, but an output mode is not limited thereto. The output unit 13 according to the present embodiment may output a classification result by the classification unit 116.

According to the apparatus 1 described above, an acquisition data group is split into a training data group and a test data group, and appropriateness or inappropriateness of the test data group is determined based on an effect size corresponding to a difference in a feature value between the training data group and the test data group. Therefore, by determining that a test data group having an effect size less than the upper limit value is appropriate, it is possible to acquire the training data group and the test data group that are statistically equivalent or similar. Thus, unlike a case where the training data group and the test data group are not equivalent or similar, it is possible to test the learning model 121 with high accuracy and acquire the learning model 121 which is highly accurate.

In addition, since a split ratio between the test data group determined to be appropriate and the training data group is specified, each acquisition data group can be statistically equivalently or similarly split by the specified split ratio. Therefore, it is possible to facilitate the splitting of the acquisition data group.

In addition, a plurality of data group sets are generated with split ratios different from each other from a common acquisition data group, and based on an effect size calculated for each of the plurality of data group sets, a test data group of one of the data group sets is determined to be appropriate. Therefore, an appropriate split ratio can be specified from among the plurality of split ratios.

In addition, an effect size is calculated for each of a plurality of features included in each data, and determination is made based on a maximum effect size among the effect sizes calculated for respective features. Therefore, it is possible to reliably make the training data group and the test data group statistically equivalent or similar.

In addition, the learning model 121 is trained using data included in the training data group, and the learning model 121 is tested using data included in the test data group. Therefore, the learning model 121 trained by the training data group and tested by the test data group can be acquired.

In addition, since the acquisition data group is split such that the test data group is smaller than the training data group, a training accuracy can be enhanced by increasing a ratio of the training data group.

### (Acquisition data group)

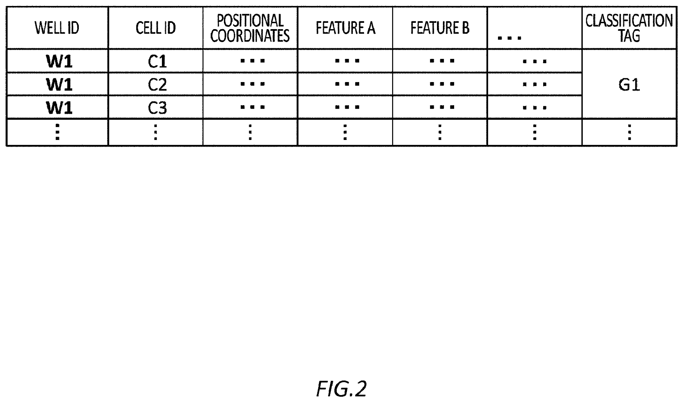

Fig. 2 illustrates an acquisition data group. The acquisition data group may include, for each target cell, identification information of a well in which the cell is cultured, identification information of the cell, a position of the cell in an image, and each feature value. Note that a classification tag indicating a classification is added to the acquisition data group in the present drawing.

### (Operation)

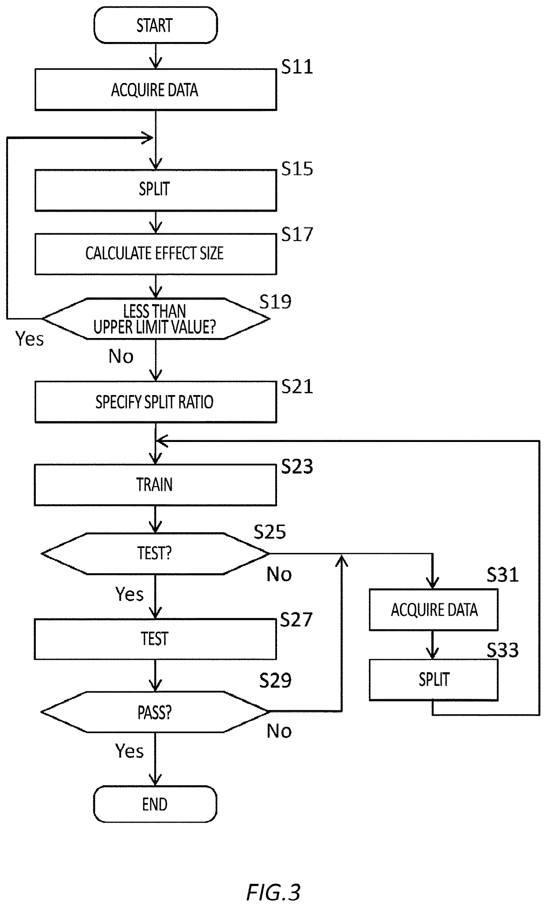

Fig. 3 illustrates an operation of the apparatus 1. The apparatus 1 performs training processing of the learning model 121 by performing processing of steps S11 to S33.

In step S11, the acquisition unit 110 acquires a plurality of pieces of data including feature values, that is, an acquisition data group. The acquisition unit 110 may acquire, for each subject, data each including a feature value of a subject. A classification tag indicating a classification of a target (in the present embodiment, a subject group as an example) indicated by the acquisition data group may be added to the acquisition data group. Note that the acquisition unit 110 may acquire the data group by analyzing image data supplied from the image capturing unit 10, or may acquire the data group by analyzing image data stored in advance in the storage unit 12.

In step S15, the splitting unit 111 splits the acquired acquisition data group into a training data group and a test data group. The splitting unit 111 may split the acquisition data group such that the test data group is smaller than the training data group. Here, the processing of step S15 may be executed a plurality of times via step S19 described later, and the splitting unit 111 may perform splitting with split ratios different from each other in each processing of step S15. For example, the splitting unit 111 may generate data group sets of training data groups and test data groups by varying a split ratio such that a ratio of the test data group decreases sequentially each time the processing of step S15 is performed. As an example, the splitting unit 111 may generate the data group sets by setting the ratio of the test data group sequentially to 20%, 10%, ..., and the like each time the processing of step S15 is performed.

In step S17, the calculation unit 112 calculates an effect size corresponding to a difference in a feature value between the training data group and the test data group. The calculation unit 112 may calculate the effect size for each of a plurality of features included in each data. The calculation unit 112 may calculate the effect size each time the data group set of the training data group and the test data group is generated by the processing of step S15. The calculation unit 112 may calculate, for each feature, the effect size between the test data group and the training data group in the data group set generated by the processing in step S15 executed most recently.

In step S19, the determination unit 113 determines appropriateness or inappropriateness of the test data group based on the calculated effect size. The determination unit 113 may make a determination based on a maximum effect size among the effect sizes calculated for respective features. The determination unit 113 may make the determination by comparing the maximum effect size with an upper limit value, and may determine that the test data group is appropriate in accordance with the maximum effect size being less than the upper limit value.

If it is determined that the test data group is appropriate (step S19; Yes), the processing may proceed to step S15 described above. Accordingly, the ratio of the test data group is further reduced, and it is determined whether or not the test data group is appropriate. When the processing of steps S15 to S19 is repeated, the determination unit 113 may determine that the test data group of the data group set generated last among data group sets below the upper limit value is appropriate. In the present embodiment, as an example, every time the determination unit 113 determines that the test data group is appropriate, the determination unit 113 may determine again, as an inappropriate test data group, the test data group determined to be appropriate in the processing of Step S19 so far. Accordingly, an appropriate test data group having a minimum ratio is retrieved. If it is determined that the test data group is not appropriate (step S19; No), the processing may proceed to step S21.

In step S21, the specification unit 114 specifies a split ratio between the test data group determined to be appropriate by the determination unit 113 and the training data group.

In step S23, the training processing unit 115 trains the learning model 121 by using data included in the training data group. The training processing unit 115 may split the training data group into a plurality of data groups each including a plurality of pieces of data and perform training processing for each data group, or may perform training processing using the training data group as it is.

In step S25, the test unit 117 determines whether or not to test the learning model 121. The test unit 117 may determine to perform a test in accordance with a user operation to perform the test. The test unit 117 may determine to perform the test in accordance with satisfaction of a predetermined test start condition. The test start condition may be that the training processing is performed in step S23 by using a reference number of acquisition data groups, or that the training processing is performed in step 23 by using each of acquisition data groups to which classification tags for a plurality of predetermined classifications are added.

If it is determined that the test is not to be performed (step S25; No), the processing may proceed to step S31. If it is determined that the test is to be performed (step S25; Yes), the processing may proceed to step S27.

In step S27, the test unit 117 tests the trained learning model 121 by using data included in the acquired test data group. The test unit 117 may supply the test data group to the classification unit 116, acquire a classification result by the learning model 121, and repeatedly execute, a reference number of times, processing of comparing a classification indicated by a classification tag of the test data group with the classification by the learning model 121. The test unit 117 may determine that the learning model 121 has passed when, out of the reference number of comparisons, the classification indicated by the classification tag and the classification by the learning model 121 match in a number of comparison results more than or equal to a predetermined allowable number, and may determine that the learning model 121 has failed when the number of matching comparison results is less than the allowable number. Note that the test unit 117 may split a test data group into a plurality of data groups each including a plurality of pieces of data, and perform the test for each data group, or may perform the test by using the test data group as it is.

In step S29, the test unit 117 determines whether or not the learning model 121 has passed the test. If it is determined that the learning model 121 has passed the test (step S29; Yes), the operation may be ended. If it is determined that the learning model 121 has not passed the test (step S29; No), the processing may proceed to step S31.

In step S31, the acquisition unit 110 acquires an acquisition data group. The acquisition unit 110 may acquire the acquisition data group in a similar manner to step S11 described above. However, the acquisition data group acquired in step S31 may be different from the acquisition data group acquired in step S11. In addition, the processing of step S31 may be executed a plurality of times through the processing of step S25 described above, and the acquisition data groups acquired in each processing of step S31 may be different from each other.

In step S33, the splitting unit 111 splits the acquired acquisition data group into a training data group and a test data group. The splitting unit 111 may perform splitting at the split ratio specified in step S21 described above. When the processing of step S33 ends, the processing may proceed to step S23 described above. Accordingly, a plurality of training data groups is generated at a same split ratio, and the training processing of the learning model 121 is performed.

According to the above operation, the data group set is generated by varying the split ratio such that the ratio of the test data group decreases sequentially, the effect size is calculated, and it is determined that the test data group of the data group set generated last among the data group sets below the predetermined upper limit value is appropriate. Therefore, when the effect size increases as the ratio of the test data group decreases, it is determined that a test data group having a smallest ratio among the test data groups in which the effect size is less than the upper limit value is appropriate. Therefore, the training accuracy can be enhanced by increasing the ratio of the training data group while maintaining high test accuracy.

### (Operation example)

### ((Preparation of subject group))

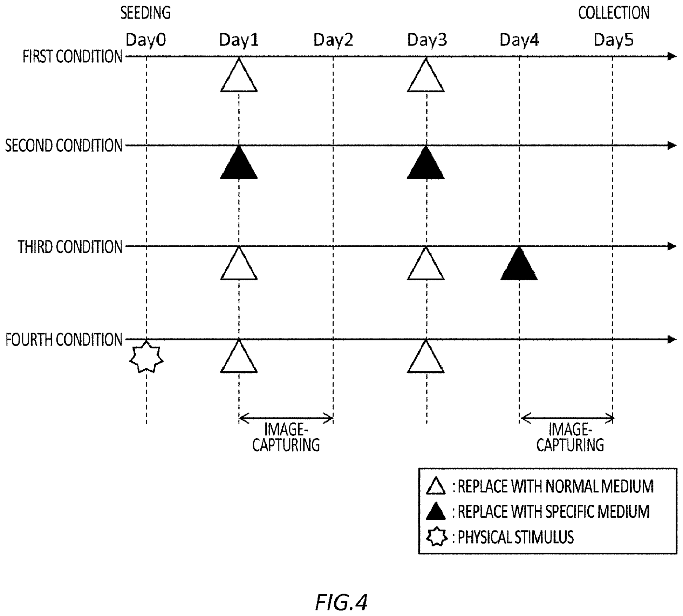

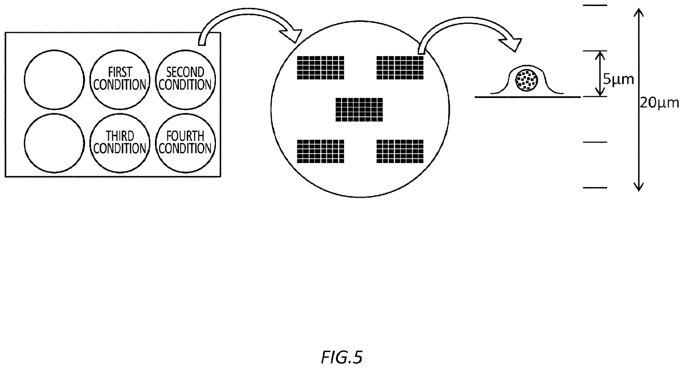

Fig. 4 illustrates a method of generating a subject group. In the present operation example, iPS cells (201B7 strain) as a subject were cultured under following first to fourth conditions. Culturing was performed in separate wells in a same well plate (see Fig. 5 described later). Note that in the present operation example, a classification of a cell group varies depending on culture conditions.

### (((First condition)))

A general maintenance culture method for iPS cells was used to perform culture for 5 days. On Day 1 and Day 3, a medium was replaced with a general medium.

### (((Second condition)))

Culture was performed in a manner similar to that in the first condition except that the medium was replaced with an inactivation medium on Day 1 and Day 3 and the culture was performed in a poor nutrition state. As the inactivation medium, STEMFIT (registered trademark) medium heat-treated at 56°C for 30 minutes was used.

### (((Third condition)))

Culture was performed in a manner similar to that in the first condition except that the medium was replaced with a differentiation promoting medium on Day 4. As the differentiation promoting medium, Dulbecco's modified Eagle's medium containing 10% fetal bovine serum, 1% non-essential amino acids for minimum essential medium, and 1% GlutaMax was used.

### (((Fourth condition)))

Culture was performed in a manner similar to that in the first condition except that a physical stimulus of performing 20 pipettings was applied to a cell suspension to be seeded.

### ((Image-capturing))

Fig. 5 illustrates a method of capturing a subject group. In the present operation example, the cell group was captured with a microscope on Days 1 to 2 and Days 4 to 5 of the culture under each condition. Image-capturing was performed 20 times at one-hour intervals.

Image-capturing was performed on a total of 200 capturing regions (black rectangular regions in the drawing) in the well by using an "image cytometer CellVoyager CQ-1" (manufactured by Yokogawa Electric Corporation) equipped with a 20× high numerical aperture objective lens. In each capturing region, five images were captured by moving a focal plane by 5 µm in a height direction (also referred to as a z axis direction). Using image analysis software "CellPathfinder" (manufactured by Yokogawa Electric Corporation), a bright-field image with enhanced contrast was generated from the five pieces of image data for each capturing region. Note that in a right part of the drawing, an example of a relationship between a height of the cells on the well plate and an interval between focal planes is shown.

### ((Acquisition of data group))

For the acquired image, individual cells were recognized in the images using a DeepAreaFinder function of the "CellPathfinder" (manufactured by Yokogawa Electric Corporation), and a feature vector was generated by calculating a feature of a shape and a feature of texture for each cell. The generated feature vectors were grouped for each culture condition to generate four acquisition data groups targeted for cell groups of separate classifications.

Note that as the feature of the shape, an area (µm²), a diameter (µm), a perimeter (µm), circularity, a compactness measure, asymmetry, a skeleton length, a branching number, and a branch number were used. As the feature of the texture, a number of at least one peak, a number of at least one hole, a number of at least one ridge, a number of at least one valley, a number of at least one edge, and a number of at least one saddle are used.

### ((Specification of split ratio))

An acquisition data group (also referred to as a first acquisition data group) for a cell group cultured under any condition (for example, the first condition) was split, and a minimum ratio of a test data group in which a maximum effect size was smaller than an upper limit value of 0.1 was retrieved and found to be 0.1. Accordingly, an appropriate split ratio was specified as training data group:test data group = 0.9:0.1.

### ((Training processing))

Training processing of the learning model 121 was performed using a training data group obtained by splitting the acquisition data group for the cell group of each classification into training data group test data group = 0.9:0.1. In addition, the learning model 121 was tested using the acquired test data group. Thereafter, the acquisition and splitting of the acquisition data group and the training processing of the learning model 121 were repeated until the learning model 121 passed the test.

### ((Classification))

When the acquisition data group acquired from the cell group newly cultured under any one of the first to fourth conditions was supplied to the learning model 121 that passed the test, a correct classification matching the culture condition was output.

### (Texture of subject)

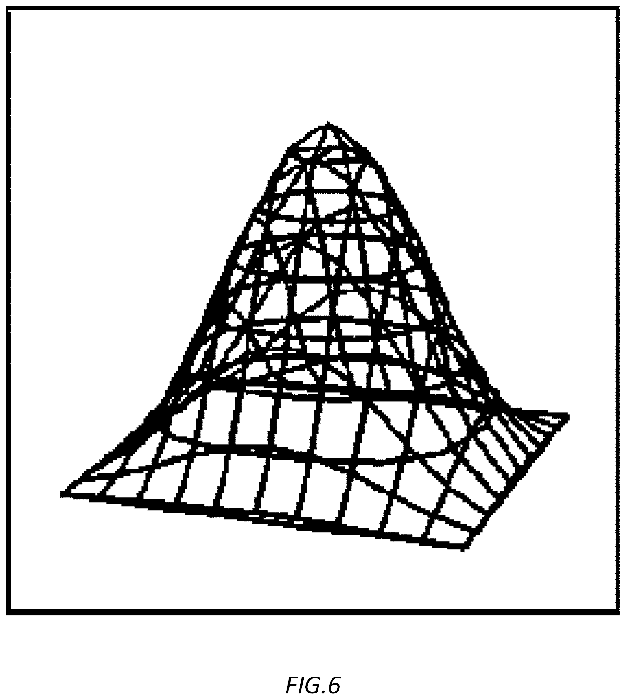

Fig. 6 illustrates a tip shape of a subject.

Note that, in Figs. 6 to 11, an outer shape of the subject is illustrated in a mesh-like pattern, the image capturing direction is a vertical direction, and a plane perpendicular to the image capturing direction is illustrated by a white rectangle.

The tip shape may be a shape protruding in a conical shape in the image capturing direction. A tip-shaped texture (Peak) may arise from the tip shape, and luminance may change as a distance from a center point increases.

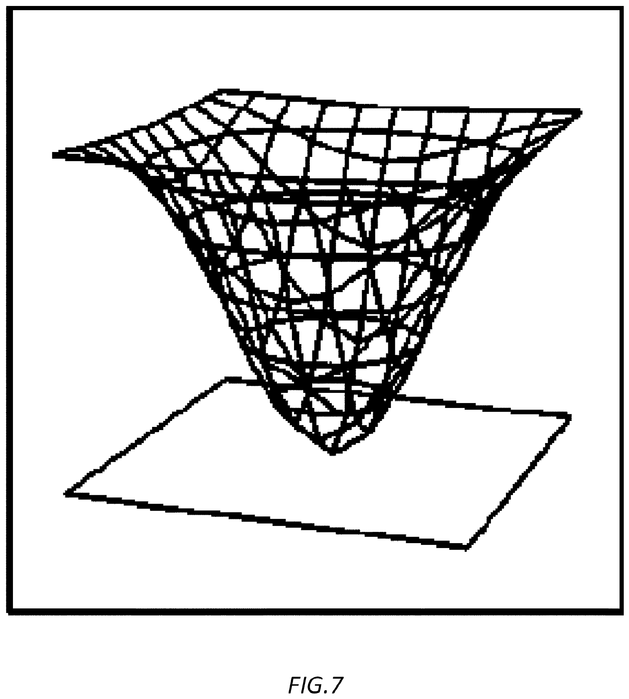

Fig. 7 illustrates a hole shape of a subject. The hole shape may be a shape recessed in a conical shape in the image capturing direction. A hole-shaped texture (Hole) may arise from the hole shape, and the luminance may change as a distance from a center point increases.

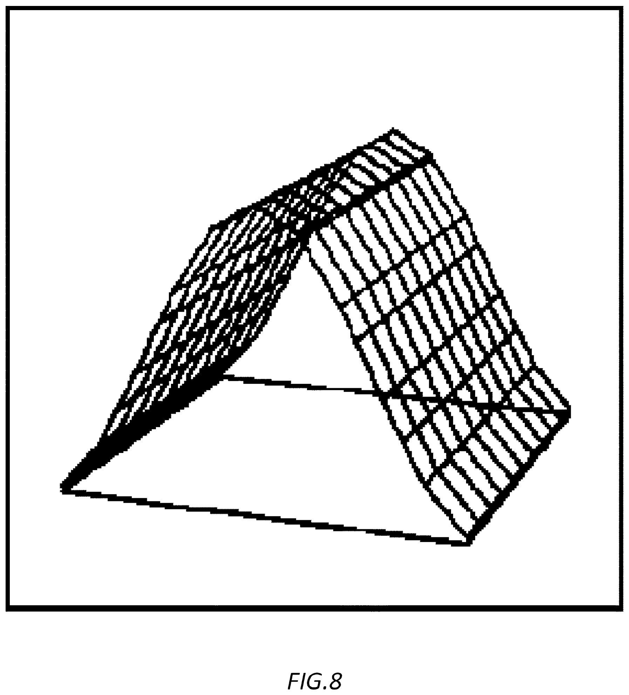

Fig. 8 illustrates a ridge shape of a subject. The ridge shape may be a ridge-like protrusion in the image capturing direction. A ridge-shaped texture (Ridge) may arise from by the ridge shape, and the luminance may change as a distance from a center line (that is, a ridge line or a crest line) increases.

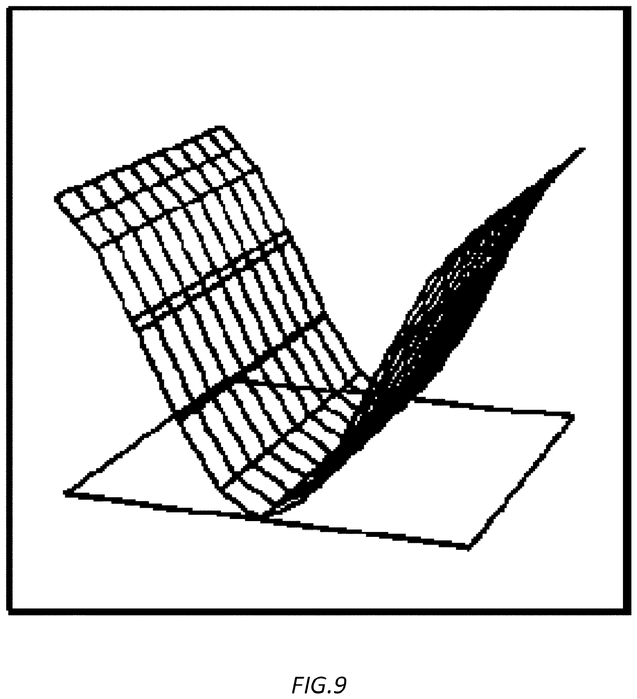

Fig. 9 illustrates a valley shape of a subject. The valley shape may be a shape recessed in a valley shape in the image capturing direction. A valley-shaped texture (Valley) may arise from the valley shape, and the luminance may change as a distance from a center line (that is, a valley line) increases.

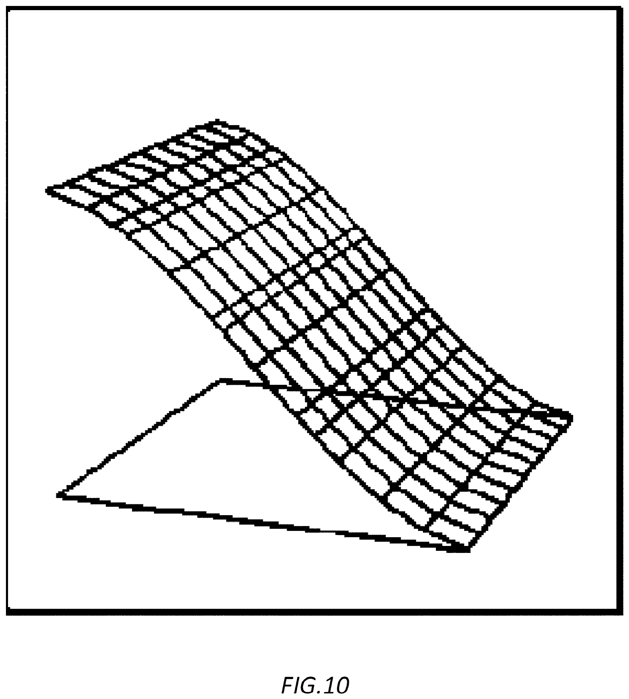

Fig. 10 illustrates an edge shape of a subject. The edge shape may be a shape of an end portion of the subject. An edge-shaped texture (Edge) may arise from the edge shape, and may be a texture in which the luminance changes toward the end portion of the subject.

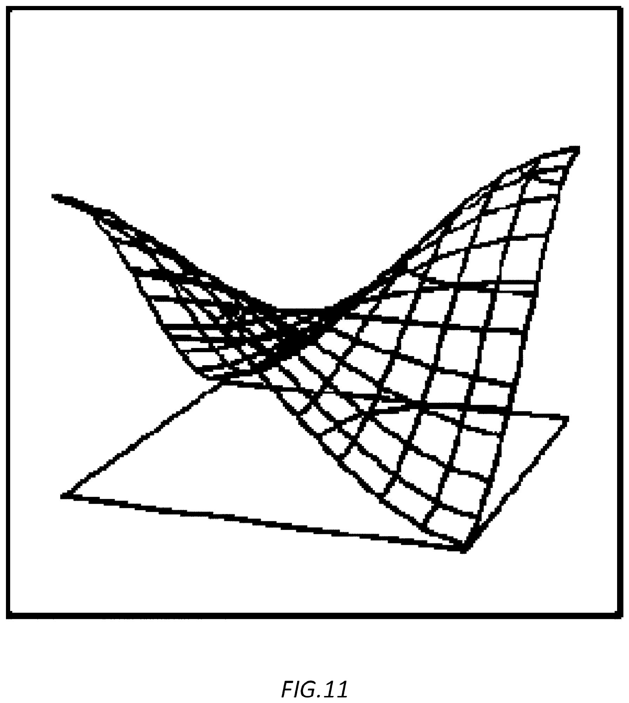

Fig. 11 illustrates a saddle shape of the subject. The saddle shape may be a shape having curvatures in two directions like a horse saddle among shapes recessed in the image capturing direction. In the drawing, a curvature in a depth direction and a curvature in a right-left direction are different. A saddle-shaped texture (Saddle) may arise from the saddle shape, and may be a texture in which the luminance changes as a distance from a center portion of the subject increases and a change in the luminance is anisotropic.

### (Modification)

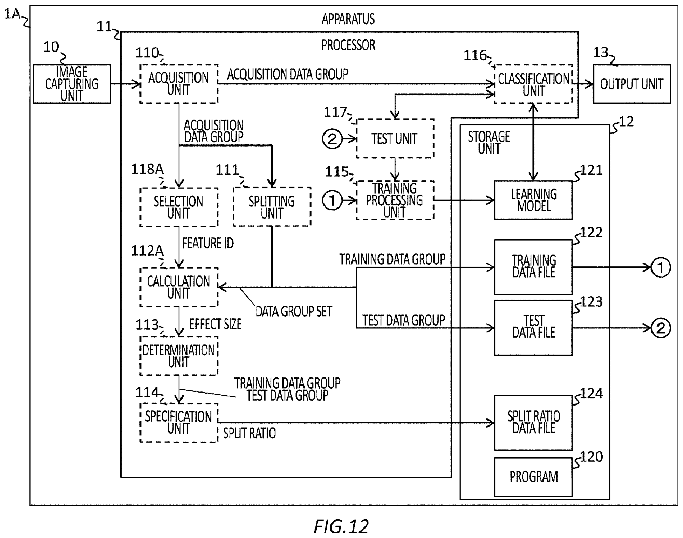

Fig. 12 illustrates an apparatus 1A according to a modification. Note that in the apparatus 1A according to the present modification, a same reference numerals are given to substantially same components as those of the apparatus 1 illustrated in Fig. 1, and description thereof will be omitted.

The processor 11 of the apparatus 1A may realize a selection unit 118A and a calculation unit 112A by executing the program 120.

The selection unit 118A selects at least one feature from among a plurality of features included in each data. The selection unit 118A may select a feature which is a target for effect size calculation by the calculation unit 112A.

The selection unit 118A may acquire acquisition data group from the acquisition unit 110 in the training stage of the learning model 121. The selection unit 118A may select one or more features in descending order of statistical significance between a training data group and a test data group from among a plurality of features included in each data of the acquisition data group. The selection unit 118A may select a feature by performing analysis of variance (ANOVA) for each feature. The selection unit 118A may supply identification information (also referred to as a feature ID) of the selected feature to the calculation unit 112A.

The calculation unit 112A may perform processing similar to that of the calculation unit 112 in the above-described embodiment except that an effect size is calculated for the feature selected by the selection unit 118A (in the present embodiment, as an example, a feature corresponding to the feature ID supplied from the selection unit 118A).

According to the above apparatus 1A, an effect size is calculated for at least one selected feature among a plurality of features included in each data. Therefore, processing can be simplified as compared with a case of calculating effect sizes for all features. In addition, since a feature selected by analysis of variance is selected, it is possible to calculate an effect size for a feature in which a statistical difference is likely to occur between a training data group and a test data group, and to make the training data group and the test data group statistically equivalent or similar.

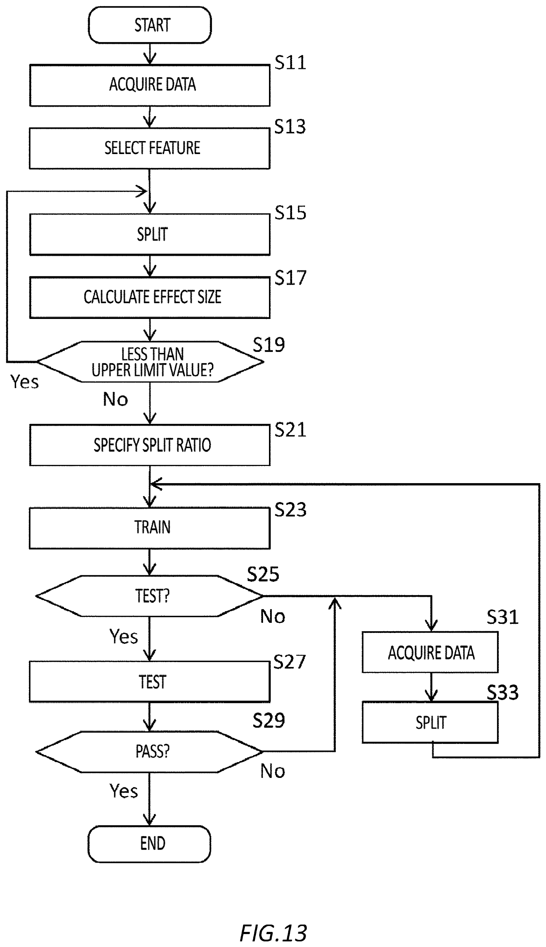

Fig. 13 illustrates an operation of the apparatus 1A. In the apparatus 1A, in step S13 between step S11 and step S15, the selection unit 118A may select at least one feature from among a plurality of features included in each data. Accordingly, in step S17, the calculation unit 112A may calculate an effect size for the selected feature.

### (Another modification)

Note that, in the above-described embodiment and modification, the acquisition unit 110 has been described as performing image analysis to acquire a data group, but may acquire a data group generated by external equipment. In this case, a feature value may not be a value of a subject, and may be a measurement value by a measurement apparatus.

In addition, although the output unit 13 has been described as outputting a classification result (for example, a classification ID of a target) by the classification unit 116, other information may be output in addition to or instead of this. For example, when information of a target indicated by each of a plurality of acquisition data groups is stored in the storage unit 12 in association with the acquisition data group, the output unit 13 may output information of a target corresponding to a classification result among targets indicated by the plurality of acquisition data groups. Accordingly, the information of the target corresponding to the classification result can be output together. The information of the target may be stored in the storage unit 12 in association with a classification tag of the acquisition data group in the training stage of the learning model 121, and in this case, the output unit 13 may output information associated with a classification tag of a classification ID supplied from the classification unit 116. The information of the target may be an acquisition data group itself, may be a mean or a variance of each feature indicated by the acquisition data group, or may be a result of analysis for the target. The analysis for the target may involve at least one of destruction or staining of the target. As an example, when the target is a cell group, the analysis may be performed by at least one of flow cytometry (FCM), quantitative PCR (qPCR), RNA sequencing, immunostaining, mass spectrometry, enzyme-linked immunosorbent assay (ELISA), or response analysis to drug treatment. A result of the analysis using the flow cytometry may include an immunophenotype of stem cells or differentiated cells, or may include an index of a cell cycle or apoptosis. A result of the analysis using the quantitative PCR or RNA sequencing may include a degree of gene expression and its temporal change (also referred to as profile). A result of the analysis using the immunostaining may include expression patterns and co-localization of specific proteins (as an example, OCT4, NANOG, Sox2, CD34, or CD45). A result of the mass spectrometry may include identification results and quantitative results of molecules such as proteins, peptides, metabolites, and further, lipids inside cells or in an extracellular environment (culture medium or carrier). A result of the ELISA may include changes in molecules such as specific proteins, hormones, or cytokines inside cells or in an extracellular environment (culture medium or carrier) or in groups of molecules involved in signal transduction inside cells. The result of the analysis using drug treatment may include changes in situations such as engraftment, proliferation, differentiation, cell death, inflammatory response, or immune response as a result of administering a drug to cells. When a target indicated by the acquisition data group is a cell group or a microbial group, analysis performed on the target may be metabolome analysis or proteome analysis.

In addition, the processor 11 of the apparatus 1, 1A has been described as realizing the specification unit 114, the training processing unit 115, the test unit 117, and the classification unit 116, but any of these may not be realized. When the processor 11 does not realize the specification unit 114, the apparatus 1, 1A may perform splitting of each acquisition data group into a data group set, calculation of an effect size, and appropriateness determination of a test data group, and may acquire a test data group determined to be appropriate and a training data group. When the processor 11 does not realize the training processing unit 115 and the test unit 117, a training data group and a test data group in the training data file 122 and the test data file 123 may be output to an external apparatus, and training processing and a test of the learning model 121 may be performed. When the processor 11 does not realize the classification unit 116, the learning model 121 for which training processing has been completed may be output to an external apparatus to cause the external apparatus to classify a target of an acquisition data group.

In addition, although the apparatus 1, 1A has been described as including the image capturing unit 10, the storage unit 12, and the output unit 13, the apparatus 1, 1A may not include any of these. When the apparatus 1, 1A do not include the image capturing unit 10, the acquisition unit 110 may acquire an image from an external image capturing apparatus. When the apparatus 1, 1A do not include the storage unit 12, the program 120, the learning model 121, the training data file 122, the test data file 123, the split ratio data file 124, or the like may be stored in an external storage apparatus. When the apparatus 1, 1A do not include the output unit 13, a classification result by the classification unit 116 may be stored in the storage unit 12.

In addition, although cells and microorganisms as subjects have been described as dispersed in a plane or a space, an aggregate of tissues or the like may be formed in a sheet shape or a lump shape. In addition, although a subject has been described as a cell or a microorganism, a type of the subject is not limited thereto. For example, the subject may be a food, a tablet, a seed, an electronic component, or the like, and may be captured in an aggregated state.

Various embodiments of the present invention may be described with reference to flowcharts and block diagrams, where blocks may represent (1) stages of processes in which operations are executed or (2) sections of apparatuses responsible for executing operations. Certain stages and sections may be implemented by a dedicated circuit, a programmable circuit supplied together with computer-readable instructions stored on computer readable media, and/or processors supplied together with computer-readable instructions stored on computer readable media. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer readable medium may include any tangible device that can store instructions to be executed by a suitable device, and as a result, the computer readable medium having instructions stored thereon includes a product including instructions that can be executed in order to create means for executing operations specified in the flowcharts or block diagrams. Examples of the computer readable medium may include an electronic storage medium, a magnetic storage medium, an optical storage medium, an electromagnetic storage medium, a semiconductor storage medium, and the like. More specific examples of the computer readable medium may include a FLOPPY (registered trademark) disk, a diskette, a hard disk, a random access memory (RAM), a read only memory (ROM), an erasable programmable read only memory (EPROM or a flash memory), an electrically erasable programmable read only memory (EEPROM), a static random access memory (SRAM), a compact disc read only memory (CD-ROM), a digital versatile disk (DVD), a BLU-RAY (registered trademark) disk, a memory stick, an integrated circuit card, and the like.

A computer-readable instruction may include: an assembler instruction, an instruction-set-architecture (ISA) instruction; a machine instruction; a machine dependent instruction; a microcode; a firmware instruction; state-setting data; or either a source code or an object code described in any combination of one or more programming languages, including an object oriented programming language such as SMALLTALK (registered trademark), JAVA (registered trademark), C++, or the like, and a conventional procedural programming language such as a "C" programming language or a similar programming language.

The computer-readable instruction may be provided for a processor or programmable circuit of a programmable data processing apparatus, such as a computer, locally or via a local area network (LAN), a wide area network (WAN) such as the Internet, or the like to execute the computer-readable instruction in order to create means for executing the operations specified in the flowcharts or block diagrams. Here, the computer may be a personal computer (PC), a tablet computer, a smartphone, a workstation, a server computer, or a computer such as a general purpose computer or a special purpose computer, or may be a computer system to which a plurality of computers are connected. Such computer system to which the plurality of computers are connected is also referred to as a distributed computing system, and is a computer in a broad sense. In a distributed computing system, a plurality of computers collectively execute a program by each of the plurality of computers executing a part of the program, and passing data during the execution of the program among the computers as needed.

Examples of the processor include a computer processor, a central processing unit (CPU), a processing unit, a microprocessor, a digital signal processor, a controller, a microcontroller, and the like. The computer may include one processor or a plurality of processors. In a multiprocessor system including a plurality of processors, the plurality of processors collectively execute a program by each of the processors executing a part of the program, and passing data during the execution of the program among the processors as needed. For example, in execution of multiple tasks, each of the plurality of processors may execute a portion of each task pieces by pieces by performing task-switching for each time slice. In this case, which portion of one program each processor is responsible for executing dynamically changes. Moreover, which portion of the program each of the plurality of processors is responsible for executing may be determined statically by multiprocessor-aware programming.

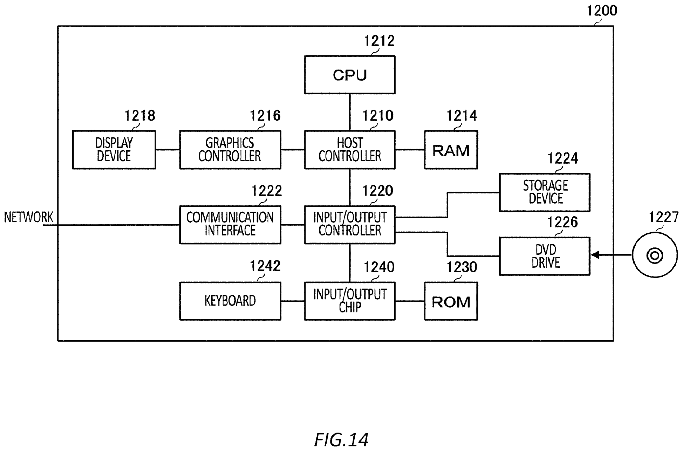

Fig. 14 illustrates an example of a computer 1200 in which a plurality of aspects of the present invention may be embodied in whole or in part. A program that is installed in the computer 1200 may cause the computer 1200 to function as operations associated with an apparatus according to the embodiment of the present invention or one or more sections in the apparatus, or may cause the computer 1200 to execute the operation or the one or more sections, and/or may cause the computer 1200 to execute processes according to the embodiment of the present invention or stages of the processes. Such a program may be executed by a CPU 1212 in order to cause the computer 1200 to execute particular operations associated with some or all of the blocks of flowcharts and block diagrams described herein.

The computer 1200 according to the present embodiment includes a CPU 1212, a RAM 1214, a graphics controller 1216, and a display device 1218, which are mutually connected by a host controller 1210. The computer 1200 also includes a communication interface 1222, a storage apparatus 1224 such as a hard disk drive, input/output units such as a DVD-ROM drive 1226 and an IC card drive, which are connected to the host controller 1210 via an input/output controller 1220. The computer also includes legacy input/output units such as an ROM 1230 and a keyboard 1242, which are connected to the input/output controller 1220 via an input/output chip 1240.

The CPU 1212 operates according to programs stored in the ROM 1230 and the RAM 1214, thereby controlling each unit. The graphics controller 1216 acquires image data generated by the CPU 1212 on a frame buffer or the like provided in the RAM 1214 or in itself, and causes the image data to be displayed on a display device 1218.

The communication interface 1222 communicates with other electronic devices via a network. The storage apparatus 1224 stores a program and data used by the CPU 1212 in the computer 1200. The DVD-ROM drive 1226 reads the programs or the data from a DVD-ROM 1227, and provides the programs or the data to the storage apparatus 1224 via the RAM 1214. The IC card drive reads programs and the data from the IC card, and/or writes the programs and the data to the IC card.

The ROM 1230 stores therein a boot program or the like that is executed by the computer 1200 at the time of activation, and/or a program which depends on the hardware of the computer 1200. The input/output chip 1240 may also connect various input/output units to the input/output controller 1220 via a parallel port, a serial port, a keyboard port, a mouse port, or the like.

Programs are provided by a computer readable medium such as the DVD-ROM 1227 or the IC card. The programs are read from the computer readable medium, are installed in the storage apparatus 1224, the RAM 1214, or the ROM 1230, which are also an example of the computer readable medium, and are executed by the CPU 1212. Information processing written in these programs is read by the computer 1200, and provides cooperation between the programs and the various types of hardware resources described above. An apparatus or method may be constructed by realizing the operation or processing of information according to the use of the computer 1200.

For example, when communication is executed between the computer 1200 and an external device, the CPU 1212 may execute a communication program loaded onto the RAM 1214 to instruct communication processing to the communication interface 1222, based on the processing described in the communication program. The communication interface 1222, under the control of the CPU 1212, reads transmission data stored in a transmission buffering region provided in a recording medium such as the RAM 1214, the storage apparatus 1224, the DVD-ROM 1227, or the IC card, transmits the read transmission data to the network, or writes reception data received from the network to a reception buffering region or the like provided on the recording medium.

In addition, the CPU 1212 may cause the RAM 1214 to read all or a necessary part of a file or database stored in an external recording medium such as the storage apparatus 1224, the DVD-ROM drive 1226 (DVD-ROM 1227), the IC card, or the like, and may execute various types of processing on data on the RAM 1214. The CPU 1212 may then write back the processed data to the external recording medium.

Various types of information such as various types of programs, data, tables, and databases may be stored in a recording medium and subjected to information processing. The CPU 1212 may execute various types of processing on the data read from the RAM 1214, which includes various types of operations, information processing, conditional judging, conditional branch, unconditional branch, search/replace of information, or the like, as described throughout this disclosure and designated by an instruction sequence of programs, and writes the result back to the RAM 1214. In addition, the CPU 1212 may retrieve information in a file, a database, or the like in the recording medium. For example, when a plurality of entries, each having an attribute value of a first attribute associated with an attribute value of a second attribute, are stored in the recording medium, the CPU 1212 may retrieve, out of the plurality of entries, an entry with the attribute value of the first attribute specified that meets a condition, read the attribute value of the second attribute stored in said entry, and thereby acquiring the attribute value of the second attribute associated with the first attribute satisfying a predetermined condition.

The above-described program or software module may be stored in the computer readable medium on the computer 1200 or near the computer 1200. In addition, a recording medium such as a hard disk or a RAM provided in a server system connected to a dedicated communication network or the Internet may be used as the computer readable medium, thereby providing the program to the computer 1200 via the network.

While the present invention has been described above by way of the embodiments, the technical scope of the present invention is not limited to the scope described in the above-described embodiments. It is apparent to persons skilled in the art that various alterations or improvements can be made to the above-described embodiments. It is also apparent from the description of the claims that the form to which such alterations or improvements are made can be included in the technical scope of the present invention.

It should be noted that the operations, procedures, steps, stages, and the like of each process performed by an apparatus, system, program, and method shown in the claims, the specification, or the drawings can be realized in any order as long as the order is not indicated by "prior to," "before," or the like and as long as the output from a previous process is not used in a later process. Even if the operation flow is described by using phrases such as "first" or "next" for the sake of convenience in the claims, specification, and drawings, it does not necessarily mean that the process must be performed in this order.

### EXPLANATION OF REFERENCES

1, 1A: apparatus; 10: image capturing unit; 11: processor; 12: storage unit; 13: output unit; 110: acquisition unit; 111: splitting unit; 112, 112A: calculation unit; 113: determination unit; 114: specification unit; 115: training processing unit; 116: classification unit; 117: test unit; 118A: selection unit; 120: program; 121: learning model; 122: training data file; 123: test data file; 124: split ratio data file; 1200: computer; 1210: host controller; 1212: CPU; 1214: RAM; 1216: graphics controller; 1218: display device; 1220: input/output controller; 1222: communication interface; 1224: storage apparatus; 1226: DVD-ROM drive; 1227: DVD-ROM; 1230: ROM; 1240: input/output chip; and 1242: keyboard.

## Claims

1. An apparatus comprising
a processor, wherein
the processor executes
acquisition processing of acquiring a plurality of pieces of data each including a feature value,
splitting processing of splitting the plurality of pieces of data acquired, into a training data group for performing training processing of a learning model and a test data group for testing the learning model,
calculation processing of calculating an effect size corresponding to a difference in a feature value between the training data group and the test data group, and
determination processing of determining appropriateness or inappropriateness of the test data group based on the effect size calculated.

2. The apparatus according to claim 1, wherein the processor further executes specifying processing of specifying a split ratio between a test data group determined to be appropriate by the determination processing and a training data group.

3. The apparatus according to claim 2, wherein
in the splitting processing, a plurality of sets of training data groups and test data groups are generated with split ratios different from each other from the plurality of pieces of data,
in the calculation processing, an effect size is calculated for each of the plurality of sets, and
in the determination processing, one of a plurality of test data groups is determined to be appropriate based on the effect size calculated.

4. The apparatus according to claim 2 or 3, wherein
in the splitting processing, a set of a training data group and a test data group is generated by varying a split ratio such that a ratio of the test data group decreases sequentially,
in the calculation processing, an effect size is calculated each time a set of a training data group and a test data group is generated, and
in the determination processing, a test data group of a set generated last among sets in which an effect size falls below a predetermined upper limit value is determined to be appropriate.

5. The apparatus according to any one of claims 1 to **4,** wherein in the splitting processing, the plurality of pieces of data are split such that a test data group is smaller than a training data group.

6. The apparatus according to any one of claims 1 to 5, wherein
in the calculation processing, an effect size is calculated for each of a plurality of features included in each data, and
in the determination processing, a determination is made based on a largest effect size among effect sizes calculated for respective features.

7. The apparatus according to any one of claims 1 to 6, wherein
the processor further executes selection processing of selecting at least one feature from among a plurality of features included in each data, and
in the calculation processing, an effect size is calculated for the feature selected.

8. The apparatus according to any one of claims 1 to 7, wherein
the processor further executes
training processing of training a learning model by using data included in a training data group, and
test processing of testing the learning model trained, by using data included in a test data group.

9. A method comprising:
acquiring a plurality of pieces of data each including a feature value;
splitting the plurality of pieces of data acquired, into a training data group for performing training of a learning model and a test data group for testing the learning model;
calculating an effect size corresponding to a difference in a feature value between the training data group and the test data group; and
determining appropriateness or inappropriateness of the test data group based on the effect size calculated.

10. A program which, when executed by a computer, causes the computer to perform operations comprising:
acquiring a plurality of pieces of data each including a feature value;
splitting the plurality of pieces of data acquired, into a training data group for performing training processing of a learning model and a test data group for testing the learning model;
calculating an effect size corresponding to a difference in a feature value between the training data group and the test data group; and
determining appropriateness or inappropriateness of the test data group based on the effect size calculated.
